# EUROPÄISCHE PATENTSCHRIFT

(11) **EP 1 189 782 B1**
(45) Veröffentlichungstag und Bekanntmachung des Hinweises auf die Patenterteilung: **31.08.2005**
(21) Anmeldenummer: 00951316.9
(22) Anmeldetag: 28.06.2000
(51) Int. Cl.: B60K 17/356

(54) **HYDROSTATISCHER FAHRANTRIEB**
HYDROSTATIC DRIVE
SYSTEME DE TRANSMISSION HYDROSTATIQUE

(30) Priorität: 01.07.1999 DE 19930425
(43) Veröffentlichungstag der Anmeldung: 27.03.2002
(73) Patentinhaber: Bosch Rexroth AG, 97816 Lohr am Main (DE)
(72) Erfinder: CUNNINGHAM, Sinclair SUC Design Ltd., Kirkcaldy (GB)
(74) Vertreter: Körfer, Thomas
(86) Internationale Anmeldenummer: PCT/EP2000/006029
(87) Internationale Veröffentlichungsnummer: WO 2001/002205

(56) Entgegenhaltungen:
- EP-A- 0 816 153
- US-A- 5 199 525
- US-A- 5 201 570

## Beschreibung

Die Erfindung betrifft einen hydrostatischen Fahrantrieb zum Antrieb von Fahrzeugen verschiedener Art.

Ein hydrostatischer Fahrantrieb nach dem Oberbegriff des Anspruchs 1 ist aus der DE-OS 20 26 910 bekannt. Bei dem aus dieser Druckschrift hervorgehenden hydrostatischen Fahrantrieb sind eine erste Hydropumpe, ein erster Hydromotor, eine zweite Hydropumpe und ein zweiter Hydromotor in einem Arbeitskreislauf seriell angeordnet. Wenn die beiden Hydromotoren verschiedene Fahrzeugräder antreiben, tritt das Problem auf, daß bei einem Schlupf an einem der Fahrzeugräder der mit diesem Fahrzeugrad in Verbindung stehende Hydromotor keinen Beitrag für den Antrieb des Fahrzeugs leistet und der Wirkungsgrad des hydrostatischen Antriebs deshalb herabgesetzt ist.

Ein weiterer hydrostatischer Fahrantrieb ist aus der EP 0 547 947 A1 bekannt. Bei dem aus dieser Druckschrift hervorgehenden hydrostatischen Fahrantrieb sind zwei an einer Fahrzeugachse gegenüberliegende Fahrzeugräder durch jeweils zwei paarweise auf einer gemeinsamen Welle angeordnete Hydromotoren angetrieben. Das von einer Hydropumpe in einem Arbeitskreislauf geförderte Hydraulikfluid verzweigt sich vor den paarweise angeordneten Hydromotoren. Während das Hydraulikfluid vom Ausgang eines der beiden paarweise angeordneten Hydromotoren unmittelbar zur Hydropumpe zurückströmt, ist der Ausgang des anderen auf der gleichen Welle angeordneten Hydromotors über jeweils einen weiteren Hydromotor mit der Hydropumpe verbunden, wobei diese weiteren Hydromotoren Fahrzeugräder einer anderen Fahrzeugachse antreiben. Bei dem aus dieser Druckschrift hervorgehenden hydrostatischen Fahrantrieb sind keine Maßnahmen vorgesehen, um zu verhindern, daß bei einem Schlupf an einem der Fahrzeugräder der Wirkungsgrad des Fahrantriebs erheblich vermindert wird.

Aus der EP 0 505 254 A1 ist ein hydrostatischer Fahrantrieb bekannt, bei welchem sämtliche verschiedene Fahrzeugräder antreibende Hydromotoren parallel mit der Hydropumpe verbunden sind. An den Abtriebsachsen der einzelnen Hydromotoren sind Drehzahlsensoren vorgesehen. In Abhängigkeit von den ermittelten Drehzahlen an den einzelnen Abtriebswellen kann die die zugeordneten Hydromotoren durchströmende Druckfluidmenge durch einstellbare, gedrosselte Verzweigeventile reguliert werden, so daß mögliche Drehzahlunterschiede ausgeglichen werden und insbesondere eine Lenkung oder ein exakter Geradeaus-Fahrbetrieb ermöglicht wird. Um einen Schlupf an einem der Fahrzeugräder auszugleichen, ist diese Anordnung jedoch nur begrenzt einsatzfähig.

Aus der EP 0 378 742 A2 ist ein hydrostatischer Fahrantrieb bekannt, bei welchem ein erster und ein zweiter Antriebsstrang beim Kurvenfahrbetrieb vollständig voneinander getrennt sind, wobei der erste Antriebsstrang eine erste Hydropumpe und einen ersten Hydromotor und der zweite Antriebsstrang eine zweite Hydropumpe und einen zweiten Hydromotor aufweist. Um einen möglichst exakten Geradeaus-Fahrbetrieb zu ermöglichen, sind die Hydromotoren bei der Geradeausfahrt mittels einer mechanischen Kupplung einerseits mechanisch miteinander verbindbar. Andererseits sind die getrennten hydraulischen Arbeitskreisläufe beim Geradeaus-Fahrbetrieb durch Ventile miteinander hydraulisch verbunden. Eine Maßnahme zur Verhinderung einer Beeinträchtigung des Wirkungsgrades bei einem Schlupf an einem der beiden Antriebsstränge geht aus dieser Druckschrift nicht hervor.

Aus der US 5,199,525 ist eine Kontrollschaltung für ein Fahrzeug mit hydrostatischen Allrad-Antrieb bekannt. Der hydrostatische Antrieb umfaßt Ventile, die Leistung an bestimmte Antriebsräder von Motoren auskoppelt, sobald bei einer Fahrzeugbewegung Schlupf detektiert wird. Das Einschrauben von Ventilen erlaubt ebenfalls, daß das Hydraulikfluid zwischen der Einlässöffnung eines Antriebsrads eines Motors und der Auslassöffnung eines Antriebsrads eines weiteren Motors hin und her fließt. Dies stellt eine Preventionsmaßnahme dar, die einen abrupten Übergang bei einer Auskupplung eines Motors verhindern soll.

Der Erfindung liegt die Aufgabe zugrunde, einen hydrostatischen Fahrantrieb zum Antrieb von mehreren Antriebssträngen zu schaffen, bei welchem der Wirkungsgrad nicht wesentlich herabgesetzt ist, wenn an einem der Antriebsstränge ein Schlupf auftritt.

Die Aufgabe wird durch die kennzeichnenden Merkmale des Anspruchs 1 in Verbindung mit den gattungsbildenden Merkmale gelöst.

Der Erfindung liegt die Erkenntnis zugrunde, daß durch ein Schaltventil, welches im Falle eines Schlupfes an einem der Antriebsstränge den mit diesem Antriebsstrang verbundenen Hydromotor überbrückt, einer Verminderung des Wirkungsgrades dadurch begegnet werden kann, daß das Hydraulikfluid nunmehr direkt dem jeweils anderen, nicht von dem Schlupf betroffenen Hydromotor zugeführt wird. Die volle hydraulische Leistung der Hydropumpe steht somit an dem von dem Schlupf nicht betroffenen Hydromotor zur Verfügung.

Aus den Unteransprüchen gehen vorteilhafte Weiterbildungen der Erfindung hervor.

Es ist vorteilhaft, jedem Hydromotor ein Schaltventil zuzuordnen, so daß beim Auftreten eines Schlupfes an einem der Antriebsstränge der diesem Antriebsstrang zugeordnete Hydromotor durch das zugeordnete Schaltventil überbrückt werden kann.

Die Schaltventile können durch den Druckabfall an dem dem jeweiligen Schaltventil zugeordneten Hydromotor oder aber auch durch den Druckabfall an dem bzw. den anderen Hydromotor bzw. Hydromotoren angesteuert werden. Ein Kriterium für das Auftreten eines Schlupfes an einem Antriebsstrang ist entweder eine deutliche Verminderung des Druckabfalls an dem diesem Antriebsstrang zugeordneten Hydromotor oder ein deutlicher Anstieg des Druckabfalls an dem bzw. den anderen Hydromotor bzw. Hydromotoren.

Alternativ kann das Auftreten eines Schlupfes auch durch einen Vergleich der Drehzahlen an den unterschiedlichen Antriebssträngen erfaßt werden. Sofern die unterschiedlichen Antriebsstränge unterschiedliche Räder des Fahrzeugs antreiben, die sich, gleicher Raddurchmesser vorausgesetzt, im Falle des schlupflosen Antriebs mit gleicher Drehzahl drehen, deutet ein Abweichen der Drehzahlen an den unterschiedlich angetriebenen Fahrzeugrädern auf ein Auftreten eines Schlupfes an demjenigen Fahrzeugrad hin, welches eine deutlich höhere Drehzahl als die übrigen Fahrzeugräder aufweist.

Ausführungsbeispiele der Erfindung werden nachfolgend unter Bezugsnahme auf die Zeichnung näher beschrieben. In der Zeichnung zeigen:
- Fig. 1: ein hydraulisches und elektrisches Prinzipschaltbild eines Beispiels eines hydraulischen Fahrantriebes;
- Fig. 2: ein hydraulisches und elektrisches Prinzipschaltbild eines ersten Ausführungsbeispiels der Erfindung; und
- Fig. 3: ein hydraulisches und elektrisches Prinzipschaltbild eines zweiten Ausführungsbeispiels der Erfindung.

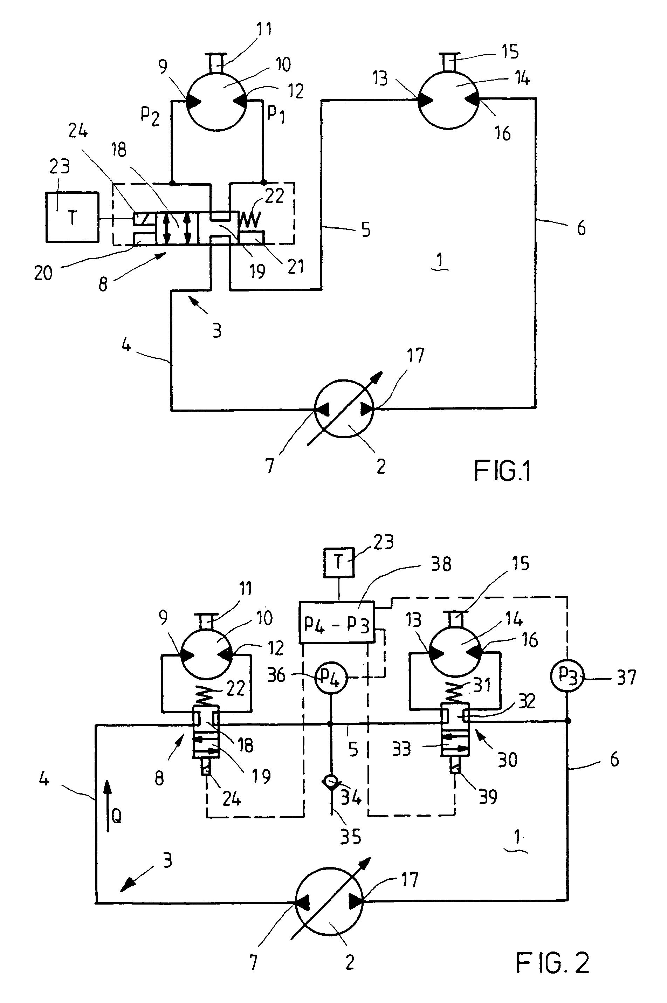

Fig. 1 zeigt ein Prinzipschaltbild eines Beispiels eines hydraulischen Fahrantriebes. Der erfindungsgemäße hydrostatische Fahrantrieb 1 besteht aus einer vorzugsweise verstellbaren Hydropumpe 2, die beispielsweise von einem nicht dargestellten Verbrennungsmotor angetrieben wird. Eine Arbeitsleitung 3 umfaßt einen ersten Arbeitsleitungsabschnitt 4, einen zweiten Arbeitsleitungsabschnitt 5 und einen dritten Arbeitsleitungsabschnitt 6.

Der erste Arbeitsleitungsabschnitt 4 verbindet in einem zunächst zu betrachtenden Grundzustand, bei welchen an dem Fahrantrieb 1 kein Schlupf auftritt, einen ersten Anschluß 7 der Hydropumpe 2 über ein Schaltventil 8 mit einem ersten Anschluß 9 eines ersten Hydromotors 10. Der erste Hydromotor 10 treibt über einen ersten Antriebsstrang 11 beispielsweise die Vorderräder eines Fahrzeugs an. Der zweite Arbeitsleitungsabschnitt 5 verbindet in diesem Grundzustand einen zweiten Anschluß 12 des ersten Hydromotors 10 über das Schaltventil 8 mit einem ersten Anschluß 13 eines zweiten Hydromotors 14. Der zweite Hydromotor 14 treibt über einen zweiten Antriebsstrang 15 beispielsweise die Hinterräder des Fahrzeugs an. Schließlich verbindet der dritte Arbeitsleitungsabschnitt 6 einen zweiten Anschluß 16 des zweiten Hydromotors 14 mit einem zweiten Anschluß 17 der Hydropumpe 2.

Das Schaltventil 8 verbindet in dem vorstehend beschriebenen Grundzustand, welcher der ersten Schaltstellung 18 des Schaltventils 8 entspricht, den ersten Anschluß 7 der Hydropumpe 2 mit dem ersten Anschluß 9 des ersten Hydromotors 10 und den zweiten Anschluß 12 des ersten Hydromotors 10 mit dem ersten Anschluß 13 des zweiten Hydromotors 14. In einer zweiten Schaltstellung 19 jedoch verbindet das Schaltventil 8 den ersten Arbeitsleitungsabschnitt 4 unter Umgehung des ersten Hydromotors 10 direkt mit dem zweiten Arbeitsleitungsabschnitt 5, so daß der erste Anschluß 7 der Hydropumpe 2 direkt mit dem ersten Anschluß 13 des zweiten Hydromotors 14 verbunden ist. Die beiden Anschlüsse 9 und 12 des Hydromotors 10 sind in dieser zweiten Schaltstellung 19 über das Schaltventil 8 miteinander kurzgeschlossen. Das Schaltventil 8 ist im Beispiel deshalb als 4/2-Wegeventil ausgebildet.

In dem in Fig. 1 dargestellten Beispiel wird das Schaltventil 8 von dem Druckabfall p₂-p₁ an dem ersten Hydromotor 10, d.h. der Differenz zwischen dem Druck p₂ an dem ersten Anschluß 9 und dem Druck p₁ an dem zweiten Anschluß 12 des ersten Hydromotors 10 angesteuert. Dazu sind eine erste Druckkammer 20, die mit dem ersten Anschluß 9 des ersten Hydromotors 10 verbunden ist, und eine zweite Druckkammer 21, die mit dem zweiten Anschluß 12 des ersten Hydromotors 10 verbunden ist, vorgesehen.

Wenn an dem ersten Antriebsstrang 11 bzw. an dem von diesem angetriebenen Fahrzeugrad ein Schlupf auftritt, so verringert dies den Druckabfall an dem ersten Hydromotor 10 und die Differenz p₂-p₁ zwischen den Drücken p₂ und p₁ ist relativ niedrig. Somit überwiegt an dem Schaltventil 8 die von der Feder 22 ausgeübte Kraft gegenüber der von der Differenz der Drücke p₂ und p₁ ausgeübten Gegenkraft und das Schaltventil 8 wird von der ersten Schaltstellung 18 in die zweite Schaltstellung 19 umgeschaltet. Folglich wird beim Auftreten eines Schlupfes an dem ersten Antriebsstrang 11 der erste Anschluß 7 der Hydropumpe 2 direkt mit dem ersten Anschluß 13 des zweiten Hydromotors 14 verbunden und die von der Hydropumpe 2 in der Arbeitsleitung 3 erzeugte hydraulische Leistung wird direkt an den für den Antrieb alleine zur Verfügung stehenden zweiten Hydromotor 14 übertragen. Durch Überbrücken des vorgeschalteten ersten Hydromotors 10 wird eine Drosselwirkung durch den ersten Hydromotor 10, welcher aufgrund des aufgetretenen Schlupfes für den Antrieb nicht mehr zur Verfügung steht, vermieden. Durch die erfindungsgemäße Maßnahme kann deshalb erreicht werden, daß auch beim Auftreten eines Schlupfes der Wirkungsgrad des Antriebs keine wesentliche Beeinträchtigung erfährt.

Das Zurücksetzen des Schaltventils 8 erfolgt im Beispiel mittels eines Zeittaktgebers 23, der in einem vorgegebenen Zeittakt T von beispielsweise einigen Sekunden einen elektrischen Impuls an den Elektromagneten 24 überträgt, welcher das Schaltventil 8 in die erste Schaltstellung 18 zurückschaltet. Tritt an dem ersten Antriebsstrang 11 immer noch ein Schlupf auf, so ist die Differenz p₂-p₁ zwischen den Drücken p₂ und p₁ immer noch so gering, daß die Feder 22 das Schaltventil 8 sofort wieder in die zweite Schaltstellung 19 zurückschaltet. Sofern an dem Antriebsstrang 11 zwischenzeitlich jedoch kein Schlupf mehr auftritt, verbleibt das Schaltventil 8 aufgrund der wieder vorhandenen deutlichen Differenz p₂-p₁ zwischen den Drücken p₂ und p₁ in der ersten Schaltstellung 18, so daß der Antrieb dann wieder sowohl über den ersten Hydromotor 10 und den ersten Antriebsstrang 11 als auch über den zweiten Hydromotor 14 und den zweiten Antriebsstrang 15 erfolgt.

Fig. 2 zeigt das Prinzipschaltbild eines ersten Ausführungsbeispiels der Erfindung. Zur Erleichterung der Zuordnung sind in sämtlichen Figuren der Zeichnung gleiche bzw. gleichwirkende Elemente mit übereinstimmenden Bezugszeichen versehen. Insoweit kann auf die vorstehende Beschreibung Bezug genommen werden.

Das in Fig. 2 gezeigt Ausführungsbeispiel unterscheidet sich zunächst dadurch von dem in Fig. 1 dargestellten Beispiel, daß nicht nur dem ersten Hydromotor 10 ein erstes Schaltventil 8, sondern auch dem zweiten Hydromotor 14 ein zweites Schaltventil 30 zugeordnet ist. Aufgrund der Beaufschlagung durch die Feder 22 befindet sich das Schaltventil 8 in der in Fig. 2 dargestellten Grundstellung in seiner ersten Schaltstellung 18, während sich das zweite Schaltventil 30 in dieser Grundstellung aufgrund der Beaufschlagung durch die Feder 31 in seiner ersten Schaltstellung 32 befindet. In dieser Grundstellung sind deshalb der erste Hydromotor 10 und der zweite Hydromotor 14 seriell mit der Hydropumpe 2 verbunden, wobei der erste Anschluß 7 der Hydropumpe 2 über den ersten Arbeitsleitungsabschnitt 4 und das erste Schaltventil 8 mit dem ersten Anschluß 9 des ersten Hydromotors 10, der zweite Anschluß 12 des ersten Hydromotors 10 über das erste Schaltventil 8, den zweiten Arbeitsleitungsabschnitt 5 sowie das zweite Schaltventil 30 mit dem ersten Anschluß 13 des zweiten Hydromotors 14 und der zweite Anschluß 16 des zweiten Hydromotors 14 über das zweite Schaltventil 30 und den dritten Arbeitsleitungsabschnitt 6 mit dem zweiten Anschluß 17 der Hydropumpe 2 verbunden sind.

An dem zweiten Arbeitsleitungsabschnitt 5 ist im dargestellten Ausführungsbeispiel über ein Rückschlagventil 34 eine Speiseleitung 35 angeschlossen, um aus der Arbeitsleitung 3 entweichendes Druckfluid nachzuspeisen.

Der zweite Arbeitsleitungsabschnitt 5 ist mit einem ersten Drucksensor 36 versehen, welcher den Druck p₄ in dem zweiten Arbeitsleitungsabschnitt 5 erfaßt. Entsprechend ist der dritte Arbeitsleitungsabschnitt 6 mit einem zweiten Drucksensor 37 versehen, welcher dem Druck p₃ in dem dritten Arbeitsleitungsabschnitt 6 erfaßt. Die Drucksensoren 36 und 37 sind mit einer, im Ausführungsbeispiel elektronischen, Steuereinheit 38 verbunden, welche die Differenz p₄-p₃ zwischen den Drücken p₄ und p₃ bildet. Überschreitet die Differenz p₄-p₃ einen vorgegebenen Grenzwert, so bedeutet dies, daß der Druckabfall an dem ersten Hydromotor 10 relativ gering ist. Dies deutet auf einen Schlupf an dem ersten Antriebsstrang 11 hin. In diesem Fall wird der Elektromagnet 24 betätigt, um das erste Schaltventil 8 von der ersten Schaltstellung 18 in die zweite Schaltstellung 19 umzuschalten, in welcher der erste Hydromotor 10 überbrückt ist. Wenn umgekehrt die Differenz p₄-p₃ einen vorgegebenen Grenzwert unterschreitet, so bedeutet dies einen relativ geringen Druckabfall an dem zweiten Hydromotor 14. Dies deutet auf einen Schlupf an dem zweiten Antriebsstrang 15 hin. In diesem Fall wird ein Elektromagnet 39 betätigt, um das zweite Schaltventil 30 von seiner ersten Schaltstellung 32 in seine zweite Schaltstellung 33 umzuschalten und somit den zweiten Hydromotor 14 zu überbrücken.

Auch bei diesem Ausführungsbeispiel ist ein Zeittaktgeber 23 vorgesehen, der periodisch einen Zeittakt T an die Steuereinheit 38 übermittelt. Die elektrische Steuereinheit 38 schaltet in diesem Zeittakt T probeweise die Elektromagneten 24 und 39 ab, so daß das vorher umgeschaltete Schaltventil 8 bzw. 30 wieder in seine erste Schaltstellung 18 bzw. 32 zurückkehrt. Tritt an dem zugeordneten Antriebsstrang 11 bzw. 15 immer noch ein Schlupf auf, so wird das entsprechende Schaltventil 8 bzw. 30 aufgrund der vorstehend beschriebenen Steuerung sofort wieder in seine zweite Schaltstellung 19 bzw. 33 zurückgeschaltet. Ist der Schlupf an dem entsprechenden Antriebsstrang 11 bzw. 15 jedoch zwischenzeitlich beseitigt, so verbleiben die Schaltventile 8 und 30 in ihrer jeweils ersten Schaltstellung 18 bzw. 32.

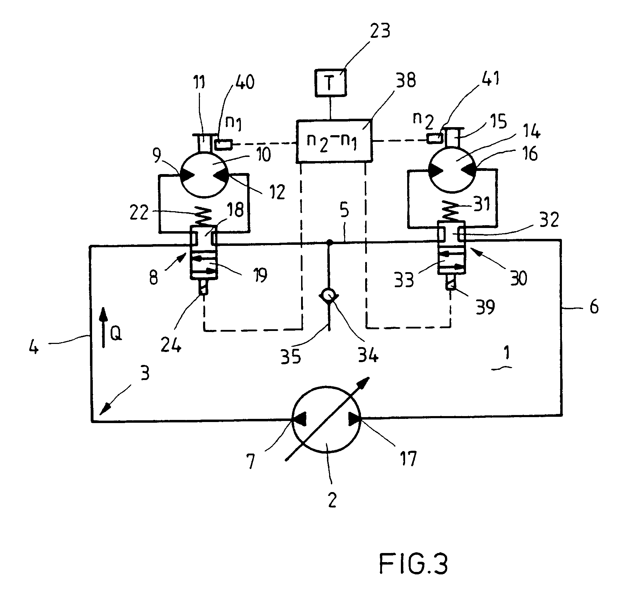

Fig. 3 zeigt ein zweites Ausführungsbeispiel des erfindungsgemäßen hydrostatischen Fahrantriebs 1. Dieses Ausführungsbeispiel stimmt weitgehend mit dem anhand von Fig. 2 bereits beschriebenen Ausführungsbeispiel überein mit dem Unterschied, daß die Ansteuerung der Elektromagneten 24 und 39 nicht in Abhängigkeit einer Druckdifferenz sondern in Abhängigkeit der Drehzahlen an den Antriebssträngen 11 und 15 erfolgt. Dazu ist an dem ersten Antriebsstrang 11 ein erster Drehzahlsensor 40 und an dem zweiten Antriebsstrang 15 ein zweiter Drehzahlsensor 41 vorgesehen. In der Steuereinheit 38 wird die Differenz n₂-n₁ zwischen der Drehzahl n₁ an dem ersten Antriebsstrang 11 und der Drehzahl n₂ an dem zweiten Antriebsstrang 15 ermittelt. Sofern der Absolutbetrag der Differenz n₂-n₁ größer als ein vorgegebener Grenzwert ist, deutet dies auf einen Schlupf an einem der beiden Antriebsstränge 11 oder 15 hin. Dabei ist derjenige Antriebsstrang 11 bzw. 15 einem Schlupf unterworfen, welcher eine gegenüber dem anderen Antriebsstrang 15 bzw. 11 erhöhte Drehzahl aufweist. Der Elektromagnet 24 bzw. 39 des zugehörigen Schaltventils 8 bzw. 30 wird betätigt, so daß das Schaltventil 8 bzw. 30 in seinen zweiten Schaltzustand 19 bzw. 33 umschaltet und den Hydromotor 10 bzw. 14 desjenigen Antriebsstrang 11 bzw. 15, welcher einem Schlupf unterworfen ist, überbrückt. Das Auslösen der Rückstellung kann auch hier durch einen von einem Zeittaktgeber 23 erzeugten Zeittakt T erfolgen.

Die Erfindung ist nicht auf die dargestellten Ausführungsbeispiele beschränkt. Insbesondere kann die Erfindung auch bei mehr als zwei seriell hintereinander geschalteten Hydromotoren in gleicher Weise zum Einsatz kommen, wobei beispielsweise der dritte Arbeitsleitungsabschnitt 6 den zweiten Hydromotor 14 dann nicht direkt mit der Hydropumpe 2 sondern indirekt über einen weiteren Hydromotor oder mehrere weitere Hydromotoren mit der Hydropumpe 2 verbindet.

## Patentansprüche

1. Hydrostatischer Fahrantrieb (1) mit
zumindest einer Hydropumpe (2),
einem mit der Hydropumpe (2) über einen ersten Arbeitsleitungsabschnitt (4) zumindest indirekt verbindbaren ersten Hydromotor (10), der einen ersten Antriebsstrang (11) antreibt,
einem über einen zweiten Arbeitsleitungsabschnitt (5) mit dem ersten Hydromotor (10) zumindest indirekt verbindbaren zweiten Hydromotor (14), der einen zweiten Arbeitsstrang (15) antreibt,
und einem dritten Arbeitsleitungsabschnitt (6) über welchen der zweite Hydromotor (14) mit der Hydropumpe (2) zumindest indirekt verbindbar ist,
wobei in dem ersten Arbeitsleitungsabschnitt (4) und dem zweiten Arbeitsleitungsabschnitt (5) ein erstes Schaltventil (8) angeordnet ist, über welches der erste Arbeitsleitungsabschnitt (4) unter Umgehung des ersten Hydromotors (10) mit dem zweiten Arbeitsleitungsabschnitt (5) verbindbar ist, wenn an dem ersten Antriebsstrang (11) ein Schlupf auftritt,
**dadurch gekennzeichnet,**
**dass** in dem zweiten Arbeitsleitungsabschnitt (5) und dem dritten Arbeitsleistungsabschnitt (6) ein zweites Schaltventil (30) angeordnet ist, über welches der zweite Arbeitsleitungsabschnitt (5) unter Umgehung des zweiten Hydromotors (14) mit dem dritten Arbeitsleitungsabschnitt (6) verbindbar ist, wenn an dem zweiten Antriebsstrang (15) ein Schlupf auftritt,

2. Hydrostatischer Fahrantrieb nach Anspruch 1,
**dadurch gekennzeichnet,**
**dass** das erste Schaltventil (8)
in einer ersten Schaltstellung (18) einen ersten Anschluß (7) der Hydropumpe (2) mit einem ersten Anschluß (9) des ersten Hydromotors (10) und einen zweiten Anschluß (12)
des ersten Hydromotors (10) mit einem ersten Anschluß (13) des zweiten Hydromotors (14) verbindet und
in einer zweiten Schaltstellung (19) den ersten Anschluß (7) der Hydropumpe (2) direkt mit dem ersten Anschluss (13) des zweiten Hydromotors (14) verbindet.

3. Hydrostatischer Fahrantrieb nach Anspruch 2,
**dadurch gekennzeichnet,**
**dass** das zweite Schaltventil (30)
in einer ersten Schaltstellung (32) einen zweiten Anschluß (12) des ersten Hydromotors (10) mit dem ersten Anschluß (13) des zweiten Hydromotors (14) und einen zweiten Anschluß (16) des zweiten Hydromotors (14) mit einem zweiten Anschluß (17) der Hydropumpe (2) verbindet und
in einer zweiten Schaltstellung (33) den zweiten Anschluß (16) des ersten Hydromotors (14) direkt mit dem zweiten Anschluß (17) der Hydropumpe (2) verbindet.

4. Hydrostatischer Fahrantriebs nach Anspruch 3,
**dadurch gekennzeichnet,**
**dass** das erste Schaltventil (8) und/oder das zweite Schaltventil (30) von dem Druckabfall (p₂-p₁, p₄-p₃) an dem ersten Hydromotor (10) und/oder dem zweiten Hydromotor (14) angesteuert wird.

5. Hydrostatischer Fahrantrieb nach einem der Ansprüche 2 bis 4,
**dadurch gekennzeichnet,**
**dass** das erste Schaltventil (8) von der ersten Schaltstellung (18) in die zweite Schaltstellung (19) umschaltet, wenn der Druckabfall (p₂-p₁) an dem ersten Hydromotor (10) einen vorgegebenen Grenzwert unterschreitet.

6. Hydrostatischer Fahrantrieb nach Anspruch 3 oder 4,
**dadurch gekennzeichnet,**
**dass** das zweite Schaltventil (30) von der ersten Schaltstellung (32) in die zweite Schaltstellung (33) umschaltet, wenn der Druckabfall (p₄-p₃) an dem zweiten Hydromotor (14) einen vorgegebenen Grenzwert unterschreitet.

7. Hydrostatischer Fahrantrieb nach einem der Ansprüche 2 bis 5,
**dadurch gekennzeichnet,**
**dass** das erste Schaltventil (8) von der ersten Schaltstellung (18) in die zweite Schaltstellung (19) umschaltet, wenn der Druckabfall (p₄-p₃) an dem zweiten Hydromotor (14) einen vorgegebenen Grenzwert überschreitet.

8. Hydrostatischer Fahrantrieb nach einem der Ansprüche 3, 4 oder 6,
**dadurch gekennzeichnet,**
**dass** das zweite Schaltventil (30) von der ersten Schaltstellung (32) in die zweite Schaltstellung (33) umschaltet, wenn der Druckabfall (p₂-p₁) an dem ersten Hydromotor (10) einen vorgegebenen Grenzwert überschreitet.

9. Hydrostatischer Fahrantrieb nach einem der Ansprüche 1 bis 3,
**dadurch gekennzeichnet,**
**dass** an dem ersten Antriebsstrang (11) ein erster Drehzahlsensor (40), der die Drehzahl (n₁) an dem ersten Antriebsstrang des (11) ermittelt, und an dem zweiten Antriebsstrang (15) ein zweiter Drehzahlsensor (41), der die Drehzahl (n₂) an dem zweiten Antriebsstrang in (15) ermittelt, angeordnet sind, und
das eine Steuereinheit (38) vorgesehen ist, die das erste Schaltventil (8) und/oder das zweite Schaltventil (30) in Abhängigkeit von der Differenz (n₂-n₁) der von den Drehzahlsensoren (40, 41) ermittelten Drehzahlen (n₁, n₂) ansteuert.

10. Hydrostatischer Fahrantrieb nach einem der Ansprüche 2 bis 8,
**dadurch gekennzeichnet,**
**dass** das erste Schaltventil (8) und/oder das zweite Schaltventil (30) von der zweiten Schaltstellung (19, 33) in die erste Schaltstellung (18, 32) durch einen Zeittakt (T) zurückgeschaltet wird.

## Claims

1. Hydrostatic drive (1) with
at least one hydraulic pump (2),
a first hydraulic motor (10) which is at least indirectly connectable to the hydraulic pump (2) via a first working line section (4) and drives a first drive train (11),
a second hydraulic motor (14) which is at least indirectly connectable via a second working line section (5) to the first hydraulic motor (10) and drives a second drive train (15),
and a third working line section (6), via which the second hydraulic motor (14) is at least indirectly connectable to the hydraulic pump (2),
there being arranged in the first working line section (4) and the second working line section (5) a first switching valve (8), via which the first working line section (4) is connectable to the second working line section (5) while bypassing the first hydraulic motor (10), if a slip occurs at the first drive train (11),
**characterised**
**in that** there is arranged in the second working line section (5) and the third working line section (6) a second switching valve (30), via which the second working line section (5) is connectable to the third working line section (6) while bypassing the second hydraulic motor (14), if a slip occurs at the second drive train (15).

2. Hydrostatic drive according to Claim 1,
**characterised**
**in that** the first switching valve (8)
in a first switching position (18) connects a first connection (7) of the hydraulic pump (2) to a first connection (9) of the first hydraulic motor (10) and a second connection (12) of the first hydraulic motor (10) to a first connection (13) of the second hydraulic motor (14) and
in a second switching position (19) connects the first connection (7) of the hydraulic pump (2) directly to the first connection (13) of the second hydraulic motor (14).

3. Hydrostatic drive according to Claim 2,
**characterised**
**in that** the second switching valve (30)
in a first switching position (32) connects a second connection (12) of the first hydraulic motor (10) to the first connection (13) of the second hydraulic motor (14) and a second connection (16) of the second hydraulic motor (14) to a second connection (17) of the hydraulic pump (2) and
in a second switching position (33) connects the second connection (16) of the first hydraulic motor (14) directly to the second connection (17) of the hydraulic pump (2).

4. Hydrostatic drive according to one of Claim 3,
**characterised**
**in that** the first switching valve (8) and/or the second switching valve (30) is driven by the pressure drop (p₂-p₁, p₄-p₃) at the first hydraulic motor (10) and/or the second hydraulic motor (14).

5. Hydrostatic drive according to one of Claims 2 to 4,
**characterised**
**in that** the first switching valve (8) switches over from the first switching position (18) into the second switching position (19) if the pressure drop (p₂-p₁) at the first hydraulic motor (10) falls below a preset limit value.

6. Hydrostatic drive according to Claim 3 or 4,
**characterised**
**in that** the second switching valve (30) switches over from the first switching position (32) into the second switching position (33) if the pressure drop (p₄-p₃) at the second hydraulic motor (14) falls below a preset limit value.

7. Hydrostatic drive according to one of Claims 2 to 5,
**characterised**
**in that** the first switching valve (8) switches over from the first switching position (18) into the second switching position (19) if the pressure drop (p₄-p₃) at the second hydraulic motor (14) exceeds a preset limit value.

8. Hydrostatic drive according to one of Claims 3, 4 or 6,
**characterised**
**in that** the second switching valve (30) switches over from the first switching position (32) into the second switching position (33) if the pressure drop (p₂-p₁) at the first hydraulic motor (10) exceeds a preset limit value.

9. Hydrostatic drive according to one of Claims 1 to 3,
**characterised**
**in that** there are arranged at the first drive train (11) a first speed sensor (40), which determines the speed (n₁) at the first drive train (11), and at the second drive train (15) a second speed sensor (41), which determines the speed (n₂) at the second drive train (15), and
**in that** there is provided a control unit (38) which drives the first switching valve (8) and/or the second switching valve (30) in dependence on the difference (n₂-n₁) of the speeds (n₁, n₂) determined by the speed sensors (40, 41).

10. Hydrostatic drive according to one of Claims 2 to 8,
**characterised**
**in that** the first switching valve (8) and/or the second switching valve (30) is switched back from the second switching position (19, 33) into the first switching position (18, 32) by a time clock (T).

## Revendications

1. Dispositif d'entraînement hydrostatique de déplacement (1) comportant
au moins une pompe hydraulique (2),
un premier moteur hydraulique (10) pouvant être relié au moins de façon indirecte à la pompe hydraulique (2) par l'intermédiaire d'un premier tronçon de canalisation de travail (4) et qui entraîne une première chaîne motrice (11),
un second moteur hydraulique (14) pouvant être relié au moins de façon indirecte au premier moteur hydraulique (10) par l'intermédiaire d'une seconde section de canalisation de travail (5) et qui entraîne une seconde chaîne motrice (15), et
une troisième section de canalisation de travail (6), par laquelle le second moteur hydraulique (14) peut être relié au moins de façon indirecte à la pompe hydraulique (2),
dans lequel dans la première section de canalisation de travail (4) et dans la seconde section de canalisation de travail (5) est disposée une première soupape de commutation (8), au moyen de laquelle la première section de canalisation de travail (4) peut être reliée à la seconde section de canalisation de travail (5) avec contournement du premier moteur hydraulique (10) lorsqu'un glissement apparaît au niveau de la première chaîne motrice (11), **caractérisé en ce que**
dans la seconde section de canalisation de travail (5) et dans la troisième section de canalisation de travail (6) est disposée une seconde soupape de commutation (30), au moyen de laquelle la seconde section de canalisation de travail (5) peut être reliée à la troisième section de canalisation de travail (6) avec contournement du second moteur hydraulique (14) lorsqu'un glissement apparaît au niveau de la seconde chaîne motrice (15).

2. Dispositif d'entraînement hydrostatique de déplacement selon la revendication 1, **caractérisé en ce que** dans une première position de commutation (18), la première soupape de commutation (8) relie un premier raccord (7) de la pompe hydraulique (2) à un premier raccord (9) du premier moteur hydraulique (10) et raccorde un second raccord (12) du premier moteur hydraulique (10) à un premier raccord (13) du second moteur hydraulique (14) et, dans une seconde position de commutation (19), la première soupape de commutation (8) relie premier raccord (7) de la pompe hydraulique (2) directement au premier raccord (9) du seconde moteur hydraulique (14).

3. Dispositif d'entraînement hydrostatique de déplacement selon la revendication 2, **caractérisé en ce que** dans une première position de commutation (32), la seconde soupape de commutation (30) relie un second raccord (12) du premier moteur hydraulique (10) au premier raccord (13) du second moteur hydraulique (14), et relie un second raccord (16) du second moteur hydraulique (14) à un second raccord (17) de la pompe hydraulique (2) et, dans une seconde position de commutation (33) relie le second raccord (16) du premier moteur hydraulique (14) directement au second raccord (17) de la pompe hydraulique (2).

4. Dispositif d'entraînement hydrostatique de déplacement selon la revendication 3, **caractérisé en ce que** la première soupape de commutation (8) et/ou la seconde soupape de commutation (30) est commandée par la chute de pression (p₂-p₁, p₄-p₃) au niveau du premier moteur hydraulique (10) et/ou du second moteur hydraulique (14).

5. Dispositif d'entraînement hydrostatique de déplacement selon l'une des revendications 2 à 4, **caractérisé en ce que** la première soupape de commutation (8) exécute une commutation de la première position de commutation (18) dans la seconde position de commutation (18) lorsque la chute de pression (p₂-p₁) au niveau du premier moteur hydraulique (10) tombe au-dessous d'une valeur limite prédéterminée.

6. Dispositif d'entraînement hydrostatique de déplacement selon la revendication 3 ou 4, **caractérisé en ce que** la seconde soupape de commutation (30) est commutée de la première position de commutation (32) dans la seconde position de commutation (33) lorsque la chute de pression (p₄-p₃) au niveau du second moteur hydraulique (14) tombe au-dessous d'une valeur limite prédéterminée.

7. Dispositif d'entraînement hydrostatique de déplacement selon l'une des revendications 2 à 5, **caractérisé en ce que** la première soupape de commutation (8) est commutée de la première position de commutation (18) dans la seconde position de commutation (19), lorsque la chute de pression (p₄-p₃) au niveau du second moteur hydraulique (14) dépasse une valeur limite prédéterminée.

8. Dispositif d'entraînement hydrostatique de déplacement selon l'une des revendications 3, 4 ou 6, **caractérisé en ce que** la seconde soupape de commutation (30) est commutée de la première position de commutation (32) dans la seconde position de commutation (33) lorsque la chute de pression (p₂-p₁) au niveau du premier moteur hydraulique (10) dépasse une valeur limite prédéterminée.

9. Dispositif d'entraînement hydrostatique de déplacement selon l'une des revendications 1 à 3, **caractérisé en ce qu'**un premier capteur de vitesse de rotation (40), qui détermine la vitesse de rotation (n₁) au niveau de la première chaîne motrice (11) est disposé sur la première chaîne motrice (11), et qu'un second capteur de vitesse de rotation (41), qui détermine la vitesse de rotation (n₂) au niveau de la seconde chaîne motrice (15), est disposé dans la seconde chaîne motrice (15), et
qu'il est prévu une unité de commande (38), que la première soupape de commutation (8) et/ou la seconde soupape de commutation (3) commandent en fonction de la différence (n₂-n₁) entre les vitesses de rotation (n₁, n₂) déterminées par les capteurs de vitesse de rotation (40, 41).

10. Dispositif d'entraînement hydrostatique de déplacement selon l'une des revendications 2 à 8, **caractérisé en ce que** la première soupape de commutation (8) et/ou la seconde soupape de commutation (30) sont commutées en retour de la seconde position de commutation (19, 33) dans la première position de commutation (18, 32) au moyen d'une cadence temporelle (T).
